# EUROPÄISCHE PATENTANMELDUNG

(11) **EP 2 463 646 A1**
(43) Veröffentlichungstag der Anmeldung: **13.06.2012**
(21) Anmeldenummer: 11190095.7
(22) Anmeldetag: 22.11.2011
(51) Int. Cl.: G01N 21/90

(54) **Inspektionsträger für Behälter**

(30) Priorität: 13.12.2010 DE 102010062922
(71) Anmelder: Krones AG, 93073 Neutraubling (DE)
(72) Erfinder: Gut, Thorsten, 93073 Neutraubling (DE)
(74) Vertreter: Grünecker, Kinkeldey, Stockmair & Schwanhäusser

(57) **Zusammenfassung**

Es wird ein Inspektionsträger für Behälter beschrieben, der mit einem Drehteller zum Aufsetzten des Behälters und einem Direktantrieb für den Drehteller versehen ist. Um einen derartigen Inspektionsträger universeller auszugestalten, wird vorgeschlagen, den Direktantrieb als Servomotor mit Hohlwelle auszubilden.

## Beschreibung

Die Erfindung bezieht sich auf einen Inspektionsträger für Behälter der im Oberbegriff in Anspruch 1 erläuterten Art.

Derartige Inspektionsträger sind beispielsweise aus der Behälterinspektionstechnik bekannt. Bei der Herstellung und Weiterbehandlung (Befüllung, Reinigung oder dgl.) sind Inspektionen der Behälter notwendig, um beispielsweise den Reinigungs- oder den Befüllzustand des Behälters zu überprüfen. Zu diesem Zweck werden Inspektionsträger eingesetzt, die die Behälter einer Inspektionseinrichtung bzw. den Elementen einer Inspektionseinrichtung in geeigneter Weise präsentieren. Da viele Inspektionsverfahren ein Drehen und Positionieren der Behälter erfordert, sind Drehteller zum Aufsetzten des Behälters üblich, die an den Inspektionsstationen vorgesehen sind, und bevorzugt durch eine Transporteinrichtung an den Inspektionsstationen vorbeigeführt werden, während die Drehteller zum Präsentieren des Behälters drehend angetrieben werden. Der bekannte Inspektionsträger ist zu mehreren am Umfang eines Drehtisches oder Karussells befestigt, wobei sich Drehtisch oder Karussell um eine vertikale Achse drehen und die Behälter somit an einer fest installierten Inspektionseinrichtung vorbeiführen. Dabei werden die Drehteller ebenfalls um eine senkrechte Achse rotierend angetrieben, was bei der bekannten Vorrichtung durch einen unterhalb des Drehtellers angeordneten Direktantrieb geschieht, der keinerlei Getriebe erfordert und somit relativ kompakt, leicht und vergleichsweise preiswert ist, so dass jeder Inspektionsträger mit einem eigenen Direktantrieb versehen ist. Der Motor des Direktantriebs ist unterhalb des Drehtellers angeordnet, so dass seine Motorwelle senkrecht nach oben verläuft und im Drehtisch gelagert ist. Auf der oberen Stirnseite der Motorwelle ist der Drehteller befestigt. In einem weiteren Ausführungsbeispiel ist ein sogenannter Außenläufermotor beschrieben, dessen Rotor als Drehteller ausgebildet ist und im Wesentlichen Napf- oder Glockenform aufweist, während der Stator zentral und im Inneren des Rotors angeordnet ist. Diese Ausgestaltung ist zwar für viele Inspektionsfälle einsetzbar; funktioniert jedoch nicht, wenn der Boden des Behälters entweder beleuchtet oder durch einen Sensor abgetastet werden muss.

Der Erfindung liegt die Aufgabe zugrunde, einen universell einsetzbaren Inspektionsträger bereitzustellen, der einen Zugang zum Boden bietet.

Die Aufgabe wird durch die Merkmale des Anspruchs 1 gelöst.

Durch die erfindungsgemäße Ausgestaltung wird auf konstruktiv einfacher Weise ein universeller Inspektionsträger geschaffen, der die Vorteile eines Drehtellers im Hinblick auf Konstruktion und Kosten auch für Inspektionen nutzbar macht, die einen Zugang zum Boden des Behälters benötigen. Durch die Verwendung eines Direktantriebs mit Hohlwelle kann der Zugang zum Boden über die Hohlwelle erreicht werden.

Vorteilhafte Weiterbildungen in der Erfindung sind den Unteransprüchen zu entnehmen.

Im Hinblick auf Einfachheit der Konstruktion und im Hinblick auf günstige Kosten bietet sich ein Torque-Motor an, der ein für sehr hohe Drehmomente optimierter Antrieb ist, jedoch im Hinblick auf seine sonstigen Vorteile, insbesondere die Hohlwelle, ein sehr geeigneter Direktantrieb für den erfindungsgemäßen Zweck darstellt.

Dabei kann der Rotor direkt als Drehteller fungieren, in dem wenigstes eine Inspektionsöffnung im Bereich der Standfläche des Behälters vorgesehen ist.

Weiterhin kann ein Inspektionselement, also beispielsweise eine Beleuchtungseinrichtung oder ein anderer Sender, bzw. ein Empfänger im Innenraum des Rotors untergebracht werden.

Der erfindungsgemäße Inspektionsträger eignet sich besonders für Handhabungseinrichtungen, die eine Vielzahl von Behältern gleichzeitig aufnehmen und diese auch gleichzeitig inspizieren.

Ein Ausführungsbeispiel wird nachfolgend anhand der Zeichnungen linear erläutert. Es zeigen:
- Fig. 1: eine Handhabungseinrichtung für Behälter mit einem erfindungsgemäßen Inspektionsträger in geschnittener Teildarstellung, und
- Fig. 2: der erfindungsgemäße Inspektionsträger in perspektivischer vergrößerter Darstellung.

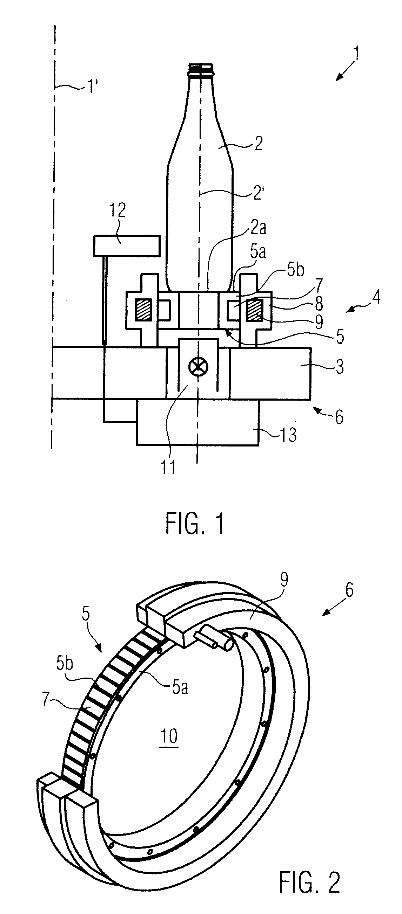

Fig. 1 zeigt eine Vorrichtung 1 zum Handhaben von Behältern 2, dargestellt sind Flaschen, die als Karussell oder Drehtisch ausgebildet ist und einen Träger 3 aufweist, der um eine senkrechte Achse 1' rotierend angetrieben wird. Der Träger 3 kann als einzelner Trägerarm oder als Drehtisch ausgebildet sein. Auf dem Träger ist eine Vielzahl von Inspektionsträgern 4 vorgesehen, die an oder in der Nähe des Umfangs des Trägers 3 angeordnet sind, wie dies üblicherweise der Fall ist. In Fig. 1 ist lediglich einer dieser Inspektionsträger 4 zu sehen, der in Fig. 2 näher dargestellt ist.

Der Inspektionsträger 4 enthält einen Drehteller 5a, der dem zu inspizierenden Behälter 2 angepasst ist und gegebenenfalls Positionier- oder Haltehilfen für den Behälter 2 aufweist. Der Drehteller 5a ist bevorzugt als Rotor 5 eines Direktantriebs 6 ausgebildet. Zu diesem Zweck ist der Rotor 5 napf- oder glockenförmig ausgebildet und enthält bevorzugt einen vom Drehteller 5a nach unten vorstehenden Ringflansch 5b, in dem Permanentmagnete 7 vorgesehen sind. Den Permanentmagneten 7 gegenüberliegend befinden sich die Spulen 8 des Stators 9, die ebenfalls ringförmig um den Rotor 5 angeordnet sind.

Alternativ kann auch ein Zentrierring (nicht dargestellt) auf dem Rotor 5 angeordnet sein, der vorzugsweise schnell wechselbar ist, so dass eine Demontage des Motors, bei Verschleiß, Formatwechsel o. ä., weitestgehend vermieden werden kann und die allgemeine Handhabe einfacher wird.

Der Drehteller 5a und demzufolge der Rotor 5 ist an wenigstens einer Stelle mit einer Inspektionsöffnung 10 versehen, die bevorzugt mittig in der Standfläche für den Behälter 2 vorgesehen ist und durch die sich die Drehachse 2' streckt.

Im bevorzugten Ausführungsbeispiel (Fig. 2) ist der Direktantrieb 6 als Torque-Motor mit Hohlwelle ausgebildet, der als Konstruktion aus konzentrischen Ringen, d. h. einen inneren Rotorring und einen äußeren Statorring, aufgebaut ist. Wird der Innendurchmesser des äußeren Statorringes an den Außendurchmesser des Behälters 2 und die axiale Länge des Statorringes nach oben hin größer als der Rotorring ausgebildet, so bildet dieser Rotor einen perfekten Inspektionsträger für die Behälter 2.

Darüber hinaus bietet der Innenraum des Rotorrings 5b eine ideale, geschützte Aufnahme für ein Inspektionselement 11, das hier als Beleuchtungseinrichtung dargestellt ist. Das Inspektionselement wird auf die Inspektionsöffnung 10 ausgerichtet und ist auf den Boden 2a des Behälters 2 gerichtet.

Das andere Inspektionselement, beispielsweise eine Kamera 12, kann bei der Drehung des Trägers 1 um die Drehachse 1' mitgeführt werden oder ist stationär an der Handhabungseinrichtung 1 befestigt, so dass der Träger 3 den Behälter 2 dort vorbeiführt. Gleichzeitig wird auch der Drehteller angetrieben. Die vorhergehende beschriebene Vorrichtung ist, z.B. in Vollflascheninspektoren einsetzbar, wo gefüllte und verschlossene Flaschen auf Fremdpartikel untersucht werden.

Ein weiterer Vorteil eines Torque-Motors liegt darin, dass er seinen eigenen Signalgeber 13 für die Rotorlage und die Drehzahl mitführt und seine Steuerung übernimmt. Die Koordinierung der Direktantriebe 6 erfolgt in üblicher Weise durch Verkabelung (Bussystem) oder drahtlos (Bluetooth) oder Infrarot oder dgl..

In Abwandlung des beschriebenen und gezeichneten Ausführungsbeispiels kann jeder Servomotor mit Hohlwelle eingesetzt werden, der sich als Einzelantrieb eignet. Auch muss der Rotor nicht unbedingt selbst als Drehteller ausgebildet sein, sondern kann an einen solchen befestigt werden.

## Patentansprüche

1. Inspektionsträger (4) für Behälter (2) mit einem Drehteller (5a) zum Aufsetzen des Behälters (2) und einem Direktantrieb (6) für den Drehteller (5a), **dadurch gekennzeichnet, dass** der Direktantrieb (6) als Servomotor mit Hohlwelle ausgebildet ist.

2. Inspektionsträger nach Anspruch 1, **dadurch gekennzeichnet, dass** der Direktantrieb (6) als Torque-Motor ausgebildet ist.

3. Inspektionsträger nach Anspruch 1 oder 2, **dadurch gekennzeichnet, dass** das der Rotor (5) des Direktantriebs (6) als Drehteller (5a) ausgebildet ist.

4. Inspektionsträger nach einem der Ansprüche 1 bis 3, **dadurch gekennzeichnet, dass** der Drehteller (5a) mit wenigstens einer im Bereich der Standfläche vorgesehenen Inspektionsöffnung (10) versehen ist.

5. Inspektionsträger nach einem der Ansprüche 1 bis 4, **dadurch gekennzeichnet, dass** der Rotor (5) mit einer Seitenwand (5b) versehen ist, an der Permanentmagnete (7) des Direktantriebs (6) angeordnet sind.

6. Inspektionsträger nach einem der Ansprüche 1 bis 4, **dadurch gekennzeichnet, dass** der Rotor einen Innenraum aufweist, in dem ein Inspektionselement (11) angeordnet ist.

7. Handhabungseinrichtung (1) für Behälter (2), ausgerüstet mit einer Vielzahl von lnspektionsträgern in (4) nach einem der Ansprüche 1 bis 6.
